# EUROPEAN PATENT SPECIFICATION

(11) **EP 0 879 108 B1**
(45) Date of publication and mention of the grant of the patent: **05.06.2002**
(21) Application number: 97904708.1
(22) Date of filing: 10.02.1997
(51) Int. Cl.: B23B 27/16, B24B 3/00

(54) **GROUND CUTTING INSERT**
GESCHLIFFENER SCHNEIDEEINSATZ
PLAQUETTE DE COUPE RAPPORTEE MEULEE

(30) Priority: 09.02.1996 SE 9600470
(43) Date of publication of application: 25.11.1998
(73) Proprietor: SANDVIK AKTIEBOLAG, 811 81 Sandviken (SE)
(72) Inventor: ROMAN, Stefan, S-811 62 Sandviken (SE)
(74) Representative: Taquist, Lennart
(86) International application number: SE9700201
(87) International publication number: WO9728919

(56) References cited:
- EP-A- 0 555 192
- EP-A- 0 691 176
- US-A- 5 078 550
- PATENT ABSTRACTS OF JAPAN, Vol. 018, No. 449; & JP,A,06 143 007 (ISHIKAWAJIMA HARIMA HEAVY IND CO LTD), 20 May 1994.

## Description

The present invention relates to a ground cutting insert according to claim 1, a sharp edge being obtained with maintained chip geometry. The cutting insert is primarily intended for milling, although also cutting inserts for turning and drilling lie within the framework of the invention.
Cutting inserts such as indexable inserts are made by form pressing and sintering of a cutting material forming powder. The formed cutting material is usually cemented carbide. The cutting insert comprises an upper surface or chip surface, a bottom surface being substantially plane-parallel with the former surface (these two surfaces constitute the main surfaces) and being abuttable against a co-operating bottom support surface in an insert seat, and side or relief surfaces extending between these two surfaces, of which side or relief surfaces at least one is abuttable against a co-operating side support surface in the insert seat. The side surfaces may be perpendicular to said upper and bottom surfaces, but usually they are somewhat obliquely positioned, in an acute angle to the upper surface and in an obtuse angle to the bottom surface, at least one transition between the upper surface and a side surface being shaped as a cutting edge.

At the production of primarily indexable cutting inserts of cemented carbide, a direct pressing method is being applied to an increasing extent, according to which method a cemented carbide forming powder first is shaped into the desired form in a pressing tool adapted for the purpose, and thereafter it is given the final strength by sintering in an oven. The pressing operation as such has been refined and is today so rational that it brings about good possibilities of forming the cutting edge and the appurtenant chip shaping surfaces and possible reinforcing faces with great accuracy.

For some types of machining, e.g., some forms of face milling and comer milling, the requirements on shape and measure accuracy have been raised during the last years. Primarily geometries with sintered-in positive cutting edges require a very high measure accuracy in order to guarantee a satisfactory function at small tooth feeds. These requirements on measure accuracy, and in some cases also on sharp cutting edges, have hitherto been achieved by so called contour grinding or peripheral grinding, which consists in that the surface(s) that adjoins to the individual cutting edge is after-ground in a step after grinding and cooling. This contour grinding is made on the relief side of the cutting insert, i.e., on the side surfaces. As an example of such a grinding, US-A-5 078 550, on wich is based the preamble of claim 1, is referred to. However, thereby the working measure or the IC measure is altered. Further, when the cutting insert has sintered-in chip breakers, when grinding, the primary land of the cutting insert may become unacceptably narrow and fragile. Moreover, the bottom surface of the cutting inserts have been ground to a substantially perfect planarity, in order to guarantee a safe and stable support in the insert seat.

However, in order to not excessively alter the working measure of the cutting insert, and at the same time obtain a sharp cutting edge, it would have been desirable to be able to grind the cutting edge with the appurtenant primary land from above, i.e., on the upper or chip surface of the cutting insert. However, by conventional grinding machines this has not been feasible due to the fact that the geometry of the upper surface has only had a grinding play around the very cutting edge line. Because of the small extent of the cutting edge line or primary land (often < 0,2 mm), the speed of the grinding plate has to be lowered and then undesired chippings are obtained. Furthermore, it is extremely difficult to control the grinding capacity when there is not enough material that exerts a resistance against the grinding operation, whereby the precision on the ground face becomes poor.

Thus, a primary object of the present invention is to provide a cutting insert that may be ground with a substantially unaltered chip cutting geometry on the rake side as well as on the relief side.

A second object of the invention is to be capable of producing sharp cutting edges without altering the chip cutting geometry.

Still another object of the present invention is to rationalize the grinding of the cutting inserts as much as possible.

These and further objects have been achieved by shaping a cutting insert with the features as defined in claim 1.

For illustrative but non limiting purposes, a preferred embodiment of the invention will now be described in more detail with reference to the appended drawings. These are herewith briefly presented:
Fig 1 shows a basic sketch of a grinding machine, which is used according to the invention.
Fig 2 shows an indexable cutting insert according to the invention which is partly shown in a cross-section that coincides with a vertical plane II-II (see fig 3) through the centre axis of the cutting insert.
Fig 3 shows a top view of an indexable cutting insert according to the invention.

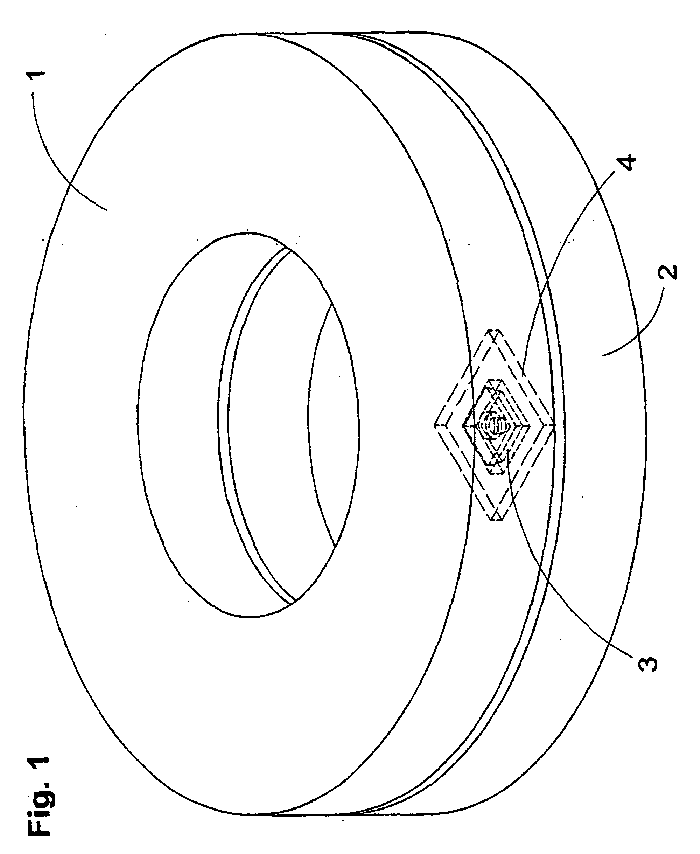

Fig 1 shows in a stylized form two individually rotatable grinding plates I and 2 of conventional type, which are used for the grinding of *inter alia* cutting inserts, such as, e.g., indexable cutting inserts of a square basic shape. In order to be able to grind such hard materials as cemented carbide at all, the upper plate 1 and the lower plate 2, respectively, are coated with a diamond powder. A cutting insert 3, whose upper and/or bottom surface are to be ground, are retained firmly between the grinding plates by means of a perforated insert holder or tray, whose thickness is less than the thickness of the cutting inserts. A part of this tray is illustrated by means of the cutout detail 4. When grinding cutting inserts with sintered chip breakers and narrow primary lands, it has only been possible to grind the bottom surface of the cutting insert. Thereby, the upper plate 1 is kept still, which in practice then only functions as a support in order to permit the necessary pressure between the bottom surface of the cutting insert and the lower grinding plate 2. When grinding cutting inserts with a wholly planar upper surface, both plates may be rotated simultaneously, whereby the opposed upper and bottom surfaces are ground simultaneously, which constitutes the optimal and most favourable grinding manner, from a production-technical point of view. In order to counteract the grinding forces and minimize the withholding forces upon the tray 4, the two plates are suitably rotated in opposite directions. If the ground surface is larger on the one side, the grinding plate on that side may be rotated correspondingly faster. Thus, by adjusting the rotating speed of the plates one may obtain the effect that about the same grinding play is removed on the two ground surfaces. However, if the difference between the sizes of the ground surfaces is too large, which thus is the case when only a narrow cutting edge line constitutes the whole grinding surface on the upper side of the cutting insert, such an adjustment of the interrelated rotation speeds is not possible any more. Specifically this problem has been solved by the present invention.

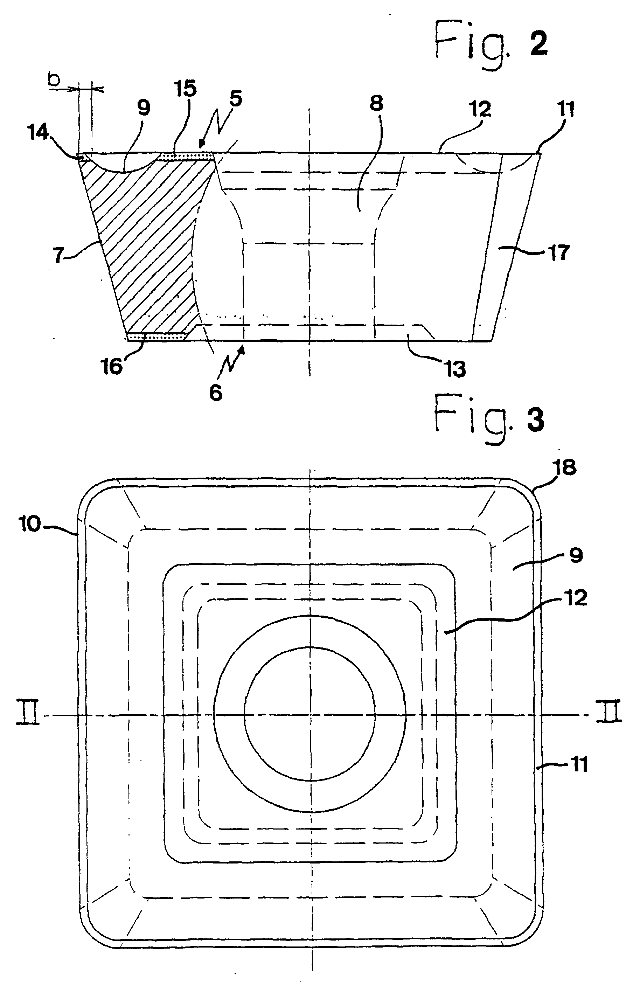

Figures 2 and 3 illustrate a square positive cutting inserts according to the present invention. It has an upper surface 5, a bottom surface 6 and four side surfaces 7. The transitions between the four side surfaces 7 may as such be sharp but consist preferably of rounded corner portions 17. The relief angle, i.e., the angle between a side surface 7 and the normal for the upper and lower surfaces, may be between 0 and +40°, preferably between +5 and +30°. Further, it may have a through centre hole 8 for the insertion of a suitable clamping device, such as lock screw (not shown). However, a centre hole as such is not necessary, in view of the fact that the cutting insert may also be fastened by other means, such as, for instance, by means of a clamp or a wedge. In accordance with modem geometries of indexable cutting inserts, the upper surface of the cutting insert has a sintered-in chip breaker 9, which results in a more positive and a more light-cutting geometry. This may for instance be made in the form of an uninterrupted, circumferential depression, such as shown in fig 3. Adjacent to the main cutting edge 10 is the primary land 11, whose width **b** is less than 1 mm, suitably 0,5 mm and in particular 0,2 mm. A rounded comer cutting edge 18 is to be found between two adjacent main cutting edges 10. Inwards from the chip breaker depression 9 is a land area 12 which surrounds the centre hole 8. Since the cutting insert is square, the land area 12 is suitably also square, although it would also be capable of having another geometrical shape, such as a regular octagon or a rounded surface.

Around the centre hole 8, the bottom surface 6 may have a depression or recess 13, whose object is to, on the one hand, decrease necessary grinding and, on the other hand, to give room for possible impurity particles originating from the hole and from the screw. According to the present invention, if the cutting insert does not have such a recess, the grinding area on the upper surface of the cutting insert shall be increased to the corresponding extent, as explained below.

Both the upper and bottom surface have surfaces with a grinding play, which in fig 2 is illustrated by dotted surfaces. On the upper surface, it is the primary land 11 that has a grinding play 14 and the land area 12 that has a grinding play 15, the primary land 11 and the land area 12 and the grinding plays 14 and 15, respectively, being located in the same plane. On the bottom surface 6 there is a grinding play 16. A substantial feature of the present invention is that the total area of the surfaces to be ground on the upper side is of about the same order of magnitude as the total area of the surfaces to be ground on the bottom side. By the expression "about the same order of magnitude" is meant that the total area to be ground on one of the main surfaces amounts to between 80 and 120% of the total area to be ground of the other main surface, preferably between 85 and 115%. In this way, a balanced grinding is achieved of the upper and bottom surfaces, since the total grinding work becomes about the same on the two sides, whereby the two grinding plates 1 and 2 may be rotated with about the same speed, in order to grind away equally much material. Due to this balancing, it has also been achieved that the narrow primary land 11 may be ground with great precision, which has hitherto been impossible. The production cost is considerably reduced by the fact that by this simultaneous top and bottom grinding one obtains a fast, effective and very accurate grinding. Moreover, the same cutting edge sharpness is obtained as by conventional grinding.

## Claims

1. A method of manufacturing a cutting insert for chip-breaking metal machining, the method comprising the steps of:
A) sintering carbide powder to form a pre-ground insert which comprises an upper rake surface, a bottom support surface which is substantially plane-parallel with the former surface, and side surfaces (7) connecting said two surfaces, which side surfaces adjoin the upper surface at least partly along main cutting edges (10), the upper surface (5) having a chip-breaking depression (9) and elongated primary lands (11) extending between said depression and the main cutting edges (10) and at least one inner land disposed inwardly of the depression ***characterized in that*** the primary lands and the at least one inner land together define a surface area lying in a first plane, the support surface defining a second surface area lying in a second plane disposed parallel to the first plane, the first surface area being between 80 and 120 percent of the second surface area.
B) positioning the pre-ground insert between a pair of grinding plates, such that the grinding plates contact the first and second surface areas, respectively and
C) rotating the grinding plates simultaneously in opposite directions about a common axis for grinding the first and second surface areas.

2. The method according to claim 1, wherein step A comprises sintering carbide powder to form a pre-ground insert whose primary land has a width less than 1.0 mm.

3. The method according to claim 1, wherein step A comprises sintering a carbide powder to form a pre-ground insert on which the total planar area to be ground on the upper side amounts to between 85 and 115 % of the total area to be ground on the bottom surface.

## Patentansprüche

1. Verfahren zum Herstellen eines Schneideinsatzes zum spanabhebenden, spanbrechenden Bearbeiten von Metall mit den Schritten:
A) Sintern von Karbidpulver zur Bildung eines vorgeschliffenen Einsatzes, der eine obere Spanfläche, eine Bodenstützfläche, die im wesentlichen planparallel zu letzterer Oberfläche ist, und Seitenflächen (7) aufweist, welche die zwei Flächen verbinden, wobei die Seitenflächen mindestens teilweise längs Hauptschneidkanten (10) an die obere Fläche angrenzen, wobei die obere Fläche (5) eine spanbrechende Vertiefung (9) und längliche Primärfasen (11) hat, die sich zwischen der Vertiefung und den Hauptschneidkanten (10) erstrecken, sowie mindestens eine innere Fase, die einwärts der Vertiefung angeordnet ist, **dadurch gekennzeichnet, daß**
die Primärfasen und die mindestens eine innere Fase zusammen einen Flächenbereich bestimmen, der in einer ersten Ebene liegt, wobei die Stützfläche einen zweiten Flächenbereich bestimmt, der in einer zweiten Ebene liegt, die parallel zu der ersten Ebene angeordnet ist, wobei der erste Flächenbereich zwischen 80 und 120 Prozent des zweiten Flächenbereiches beträgt,
B) Anordnen des vorgeschliffenen Einsatzes zwischen ein Paar von Schleifplatten derart, daß die Schleifplatten den ersten bzw. zweiten Flächenbereich berühren und
c) gleichzeitiges Rotieren der Schleifplatten in entgegengesetzten Richtungen um eine gemeinsame Achse zum Schleifen der ersten und zweiten Flächenbereiche.

2. Verfahren nach Anspruch 1, wobei Schritt A das Sintern von Karbidpulver aufweist, um einen vorgeschliffenen Einsatz zu bilden, dessen Primärfase eine Breite von weniger als 1,0 mm hat.

3. Verfahren nach Anspruch 1, wobei Schritt A) das Sintern eines Karbidpulvers aufweist, um einen vorgeschliffenen Einsatz zu bilden, auf welchem der gesamte Ebenenbereich, der auf der oberen Seite zu schleifen ist, sich auf zwischen 85 und 115% des Gesamtbereiches beläuft, der auf der Bodenfläche zu schleifen ist.

## Revendications

1. Procédé de fabrication d'une plaquette de coupe destinée à un usinage de métal avec fragmentation de copeaux, le procédé comprenant les étapes consistant à :
A) fritter une poudre de carbure afin de former une plaquette prémeulée qui comprend une surface de coupe supérieure, une surface de support inférieure qui est sensiblement dans un plan parallèle à la première surface, et des surfaces latérales (7) reliant lesdites deux surfaces, lesquelles surfaces latérales touchent la surface supérieure au moins en partie le long d'arêtes de coupe principales (10), la surface supérieure (5) comportant un creux de fragmentation des copeaux (9) et des plages principales allongées (11) s'étendant entre ledit creux et les arêtes de coupe principales (10) et au moins une plage intérieure disposée vers l'intérieur du creux, ***caractérisé en ce que***
les plages principales et la au moins une plage intérieure définissent ensemble une aire de surface s'étendant dans un premier plan, la surface de support définissant une seconde aire de surface s'étendant dans un second plan s'étendant parallèlement au premier plan, la première aire de surface représentant entre 80 et 120 pour cent de la seconde aire de surface,
B) positionner la plaquette prémeulée entre une paire de plaques de meulage, de telle sorte les plaques de meulage viennent en contact avec les première et seconde aires de surface, respectivement, et
C) faire tourner les plaques de meulage simultanément dans des sens opposés autour d'un axe commun en, vue de meuler les première et seconde aires de surface.

2. Procédé selon la revendication 1, dans lequel l'étape A comprend un frittage de poudre de carbure afin de former une plaquette prémeulée dont la plage principale présente une largeur inférieure à 1,0 mm.

3. Procédé selon la revendication 1, dans lequel l'étape A comprend un frittage d'une poudre de carbure en vue de former une plaquette prémeulée sur laquelle l'aire plane totale devant être meulée sur. le côté supérieur représente entre 85 et 115 % de l'aire totale devant être meulée sur la surface inférieure.
